# EUROPÄISCHE PATENTANMELDUNG

(11) **EP 2 400 559 A1**
(43) Veröffentlichungstag der Anmeldung: **28.12.2011**
(21) Anmeldenummer: 10166859.8
(22) Anmeldetag: 22.06.2010
(51) Int. Cl.: H01L 31/042, G01J 1/42, G01R 31/26

(54) **Einstrahlungssensor für solare Lichtintensität**

(71) Anmelder: SMA Solar Technology AG, 34266 Niestetal (DE)
(72) Erfinder: Magnussen, Dr. Björn, 34131 Kassel (DE)
(74) Vertreter: Rehberg, Bernhard Frank

(57) **Zusammenfassung**

Ein Einstrahlungssensor (3) mit einem eine äußere Oberfläche (5) aufweisenden Lichteintrittsfenster für die Erfassung der solaren Lichtintensität zur Beurteilung der elektrischen Leistung von parallel zu der Oberfläche (5) ausgerichteten Solarmodulen (2) weist eine Einrichtung zur Erfassung von Niederschlag auf die Oberfläche (5) und/oder zur Erfassung einer aus dem Niederschlag resultierenden Belegung der Obferfläche (5) auf.

## Beschreibung

### TECHNISCHES GEBIET DER ERFINDUNG

Die Erfindung bezieht sich auf einen Einstrahlungssensor für die Erfassung einer solaren Lichtintensität zur Beurteilung der elektrischen Leistung von der solaren Lichtintensität ausgesetzten Solarmodulen, wobei der Einstrahlungssensor die Merkmale des Oberbegriffs des unabhängigen Patentanspruchs 1 aufweist.

Ein Einstrahlungssensor, auf den sich die vorliegende Erfindung bezieht, ist grundsätzlich nicht zur Generierung elektrischer Energie aufgrund der solaren Lichtintensität vorgesehen. Er dient vielmehr ausschließlich dem Messen dieser solaren Lichtintensität, um einen Beurteilungsmaßstab für Solarmodule einer Photovoltaikanlage zu haben, die derselben solaren Lichtintensität ausgesetzt sind. Ein solcher Einstrahlungssensor weist typischerweise eine aktive Oberfläche auf, deren Größe nur einen Bruchteil der Größe der Oberfläche der hierzu parallel angeordneten Solarmodule beträgt. Der Einstrahlungssensor ist zudem typischerweise nahe neben oder zwischen den zu beurteilenden Solarmodulen angeordnet und in gleicher Richtung wie die Solarmodule ausgerichtet.

### STAND DER TECHNIK

Aus der DE 10 2008 003 272 A1 ist es bekannt, eine Photovoltaikanlage bezüglich ihrer Funktion zu überwachen. Hierzu ist es unter anderem vorgesehen, einen Bewegungssensor an den Solarmodulen anzubringen. Hiermit können Bewegungen im Falle eines Diebstahls aber auch in Folge von starkem Wind oder Sturm erfasst werden. Weiter ist das Anbringen eines Temperatursensors zur Überwachung der Umgebungstemperatur im Falle eines Brandes vorgesehen. Über eine Leistungsüberwachung der Solarmodule soll auch festgestellt werden, ob Schnee auf der Photovoltaikanlage liegt, oder ob sonstige Verschmutzungen die Leistungsfähigkeit der Anlage beeinträchtigen.

Aus der DE 10 2006 008 178 A1 ist ein Verfahren zur Kontrolle von solar betriebenen Kraftwerken bekannt, bei dem eine permanente Leistungskontrolle durch Vergleichsmessungen zwischen deren Solarmodulen durchgeführt wird. Dabei können auch Vergleichsmessungen zwischen mindestens einem ortsfesten Referenzmodul und wenigstens einem Teil der Solarmodule durchgeführt werden. Das Referenzmodul ist vorzugsweise ein Modul, das die gleichen spezifischen Eigenschaften wie die Solarmodule besitzt und in deren unmittelbarer Nähe unter gleichen Bedingungen wie diese von der solaren Lichtintensität bestrahlt wird. In der DE 10 2006 008 178 A1 sind eine Verschmutzung und Beschädigungen der Solarmodule durch Witterungseinflüsse als Variablen angegeben, die die Leistung der Solarmodule beeinflussen.

Aus der US 2009/0314279 A1 ist ein Array aus Photosensoren bekannt, das relativ zu einer Verschattungseinrichtung angeordnet ist, um anhand der Signale der Photosensoren ein fest mit der Anordnung aus dem Array und der Verschattungseinrichtung verbundenes Solarmodul optimal zum Sonnenstand auszurichten.

Eine gleichmäßige Verunreinigung sowohl eines Einstrahlungssensors als auch der zugeordneten Solarmodule kann durch einen Abgleich zwischen der mit dem Einstrahlungssensor erfassten solaren Lichtintensität und der elektrischen Leistung der Solarmodule nicht erfasst werden. Auch andere externe Einflüsse, die sowohl den Einstrahlungssensor als auch die Solarmodule betreffen, lassen sich durch einen Abgleich zwischen ihnen nicht auflösen.

### AUFGABE DER ERFINDUNG

Der Erfindung liegt die Aufgabe zugrunde, einen Einstrahlungssensor mit den Merkmalen des Oberbegriffs des unabhängigen Patentanspruchs 1 aufzuzeigen, mit dem externe Einflüsse, insbesondere aufgrund von Niederschlag, erkannt werden können, auch wenn sie sowohl den Einstrahlungssensor als auch mit dessen Hilfe überwachte Solarmodule betreffen.

### LÖSUNG

Die Aufgabe der Erfindung wird erfindungsgemäß durch einen Einstrahlungssensor mit den Merkmalen des unabhängigen Patentanspruchs 1 gelöst. Bevorzugte Ausführungsformen des neuen Einstrahlungssensors sind in den abhängigen Patentansprüchen 2 bis 15 beschrieben.

### BESCHREIBUNG DER ERFINDUNG

Bei dem neuen Einstrahlungssensor ist eine Einrichtung zur Erfassung von Niederschlag auf die Oberfläche des Lichteintrittsfensters des Einstrahlungssensors und/oder zur Erfassung der aus diesem Niederschlag resultierenden Belegung der Oberfläche vorgesehen. Die Einrichtung erkennt den Niederschlag bzw. die hieraus resultierende Belegung der Oberfläche. Diese Informationen stehen zusätzlich zu der von dem Einstrahlungssensor originär erfassten Lichtintensität zur Verfügung. Sie können dazu verwendet werden, den Messwert der solaren Lichtintensität zu korrigieren, weil der Niederschlag auf die oder die hieraus resultierende Belegung der Oberfläche zu einer Verfälschung der originär gemessenen Lichtintensität führt. Die Informationen über den Niederschlag bzw. die hieraus resultierende Belegung der Oberfläche des Lichteintrittsfensters können aber auch ausschließlich separat genutzt werden, um beispielsweise Kontroll- oder Reinigungsmaßnahmen auszulösen. Diese Kontroll- und Reinigungsmaßnahmen betreffen sinnvollerweise natürlich nicht nur den Einstrahlungssensor, sondern auch die mit Hilfe des Einstrahlungssensors überwachten Solarmodule. Dabei ist die Aussagekraft der erfassten Belegung der Oberfläche des Einstrahlungssensors dann besonders hoch, wenn die Oberfläche des Einstrahlungssensors parallel zu den überwachten Solarmodulen angeordnet ist.

Die Erfassung des Niederschlags auf die bzw. die Erfassung der hieraus resultierenden Belegung der Oberfläche des Lichteintrittsfensters des Einstrahlungssensors muss nicht unmittelbar an dieser Oberfläche erfolgen. Vielmehr kann hierzu auch eine parallel zu der Oberfläche und seitlich neben der Oberfläche angeordnete Vergleichsoberfläche des Einstrahlungssensors verwendet werden. Soweit hier im Zusammenhang mit der vorliegenden Erfindung von der Oberfläche, insbesondere der Oberfläche des Lichteintrittsfensters bzw. des Einstrahlungssensors die Rede ist, soll hierunter immer neben der unmittelbaren Oberfläche des Lichteintrittsfensters auch zusätzlich oder alternativ eine parallel zu dieser und seitlich neben dieser Oberfläche angeordnete Vergleichsoberfläche verstanden werden, auch wenn dies nicht explizit ausgeführt wird, und soweit im Einzelfall nichts anderes angegeben ist. Bei dieser Vergleichsoberfläche handelt es sich aber ebenfalls um eine solche des Einstrahlungssensors bzw. der ihm zugeordneten Einrichtung zur Erfassung von Niederschlag auf die und/oder hieraus resultierender Belegung der unmittelbaren Oberfläche des Lichteintrittsfensters und nicht etwa um Oberflächen der mit Hilfe des Einstrahlungssensors überwachten Solarmodule.

Der Einstrahlungssensor kann hinter der Oberfläche ein Array von Sensoren aufweisen, deren Signale miteinander abgeglichen werden. Verschiedene Formen von Niederschlag, wie beispielsweise Regen, zeichnet sich dadurch aus, dass sie - zumindest über kurze Beobachtungszeiträume - nicht homogen auf die Oberfläche einwirken. Diese Inhomogenitäten, bei Regen z. B. aufgrund des Einfallens der einzelnen Regentropfen auf die Oberfläche, können mit Sensoren erkannt werden, die in einem geeigneten Array angeordnet sind. Damit ein Array als geeignet angesehen werden kann, muss eine gewisse Mindestgröße aufweisen, und die Abstände der Sensoren untereinander dürfen nicht zu groß sein, damit die Inhomogenitäten erkannt und möglichst aufgelöst werden können. Als geeignet zur Erfassung der relevanten Inhomogenitäten, z. B. in Folge von Regen, erweisen sich Sensorarrays, die eine Fläche von 25 bis 250 cm² aufweisen, wobei die einzelnen Sensoren einen Abstand von nicht mehr als 5 cm aufweisen. Die Obergrenze von 250 cm² ergibt sich in diesem Zusammenhang nicht aus der Forderung nach Auflösung von Inhomogenitäten auf der Oberfläche in Folge von Niederschlag, sondern stellt ein Maß für eine Maximalgröße eines Einstrahlungssensors nach der vorliegenden Erfindung dar.

Die genauen Inhomogenitäten, die mit dem Array von Sensoren erfasst werden, hängen von dem Niederschlag und auch von der Art der verwendeten Sensoren ab. Es gilt jedoch die Regel, dass ein bestimmtes Signalmuster von dem Array von Sensoren einer bestimmten Art von Niederschlag entspricht, die so mit Hilfe dieses Signals erkannt werden kann.

Bei den Sensoren des Arrays kann es ich um dieselbe Photosensoren handeln, mit denen der Erfindungsgemäße Einstrahlungssensor auch die solare Lichtintensität misst. Während zum Messen der solaren Lichtintensität jedoch in der Regel eine Mittelung über die einzelnen Photosensoren sinnvoll ist, werden deren Signale bei der Erfassung des Niederschlags einzeln ausgewertet bzw. miteinander verglichen.

Bei den Sensoren des Arrays kann es sich auch um kapazitive Sensoren handeln. Ein kapazitiver Sensor ist bei der Einrichtung zur Erfassung von Niederschlag auf die und/oder hieraus resultierender Belegung der Oberfläche des Einstrahlungssensors sowieso von Vorteil, weil mit diesem, auch ohne dass nebeneinander liegende Sensoren unterschiedliche Signale liefern, Niederschlag auf die oder eine Belegung der Oberfläche erkannt werden kann. So arbeiten bekannte Regensensoren von Kraftfahrzeugen mit Hilfe von derartigen kapazitiven Sensoren. Durch Anordnung mehrerer kapazitiver Sensoren in einem Array können noch weitere Informationen über die Art des Niederschlags gewonnen werden.

Die Einrichtung des neuen Einstrahlungssensors zur Erfassung von Niederschlag auf die und/oder hieraus resultierender Belegung der Oberfläche kann weiterhin die Masse eines die Oberfläche aufweisenden Körpers des Einstrahlungssensors erfassen. Durch Niederschlag erhöht sich die Masse dieses Körpers. Dabei ist diese Erhöhung von ihrem Zeitverlauf her charakteristisch für den jeweiligen Niederschlag. So führt ein Niederschlag von Staub oder anderen Partikeln aus der Luft zu einer langsamen aber stetig anwachsenden Erhöhung der Masse des Körpers, während Regen zu einer vorübergehenden Erhöhung der Masse führt, wobei der genaue Verlauf der vorübergehenden Erhöhung der Masse Aufschluss über die Intensität des Regens und andere Rahmenbedingungen des Regens erlaubt.

Um die Bestimmung der Masse des Körpers durchzuführen, kann eine den Körper abstützende oder an einer Abstützung des Körpers angeordnete Lastzelle vorgesehen sein.

Eine größere Empfindlichkeit bei der Erfassung der Masse des Körpers wird aber z. B. dann erreicht, wenn eine Eigenfrequenz des Körpers erfasst wird, die von seiner Masse abhängt. Zu diesem Zweck kann die Einrichtung einen mechanisch-elektrischen Wandler aufweisen, der an den die Oberfläche aufweisenden Körper gekoppelt ist. Der mechanisch-elektrische Wandler kann die Eigenfrequenz des Körpers beispielsweise durch ein Sweep-Signal abfragen. Dabei lässt sich auch eine Dämpfung des Körpers in Folge seiner Belegung durch Niederschlag erfassen, woraus Rückschlüsse auf die Art des Niederschlags möglich sind.

Ein mechanisch-elektrischer Wandler kann bei dem neuen Einstrahlungssensor auch dazu vorgesehen sein, Körperschall zu erfassen, zu dem der Körper des Einstrahlungssensors in Folge von Niederschlag angeregt wird. Das Körperschallspektrum lässt in großem Umfang Rückschlüsse auf die Art des auf die Oberfläche des Körpers einwirkenden Niederschlag zu.

In einer speziellen Ausführungsform weist der neue Einstrahlungssensor eine Verunreinigungsschutzabdeckung auf, die die Oberfläche teilweise abdeckt. In diesem abgedeckten Bereich der Oberfläche wird die Beaufschlagung der Oberfläche mit Niederschlag jeglicher Art verhindert. Wenn die Verunreinigungsschutzabdeckung dann entfernt wird, kann durch Abgleich von Signalen von den nicht abgedeckt gewesenen Teilen der Oberfläche und den abgedeckt gewesenen Teilen der Oberfläche auf die Belegung der nicht abgedeckt gewesenen Teile der Oberfläche geschlossen werden. Vorzugsweise ist die Verunreinigungsschutzabdeckung zu diesem Zweck motorisch entfernbar.

Die Einrichtung des neuen Einstrahlungssensors zur Erfassung von Niederschlag auf die oder hieraus resultierende Belegung der Oberfläche kann auch die spektrale Verteilung des durch die Oberfläche fallenden Lichts erfassen. Diese spektrale Verteilung ist natürlich nicht nur, aber auch von der Belegung der Oberfläche in Folge von Niederschlag abhängig und ermöglicht auf diese Weise Rückschlüsse auf diese Belegung. Dies gilt insbesondere dann, wenn die spektrale Verteilung mit anderen im Rahmen der Erfindung gewonnenen Informationen abgeglichen wird.

Zu diesen anderen Informationen gehört auch die Richtungsverteilung des durch die Oberfläche des Einstrahlungssensors fallenden Lichts. So führt die Belegung der Oberfläche in der Regel zu einer diffusen Streuung des hindurch tretenden Lichts, die hinter der Oberfläche erkannt werden kann. Zur Erfassung der Richtungsverteilung des durch die Oberfläche des Einstrahlungssensors fallenden Lichts kann der neue Einstrahlungssensor auch in unterschiedlichen Richtungen ausgerichtete Photosensoren aufweisen.

Es ist auch von Vorteil, wenn die Einrichtung zur Erfassung von Niederschlag und/oder hieraus resultierender Belegung der Oberfläche weitere Sensoren, beispielsweise für die Temperatur und/oder die Luftfeuchtigkeit und/oder die Windgeschwindigkeit und/oder die Windrichtung in der Umgebung des Einstrahlungssensors aufweist. Zusätzlich sind vorzugsweise Mittel vorgesehen, die das Datum und/oder die Uhrzeit und/oder die Position und/oder die Ausrichtung des Einstrahlungssensors mitteilen, um diese Informationen bei der Erfassung des Niederschlags auf die oder der Belegung der Oberfläche einzubeziehen.

Der neue Einstrahlungssensor kann neben der Beurteilung der mit ihm überwachten Solarmodule hinsichtlich deren elektrischen Leistung auch zur Absicherung der Solarmodule gegen

Diebstahl genutzt werden, da die in dem neuen Einstrahlungssensor vorhandenen Sensoren auch auf die besonderen Umstände eines Diebstahls der Solarmodule wie bspw. Erschütterungen, Neigungsänderungen, auffällige Abdeckungen und dgl. ansprechen. Der Einstrahlungssensor kann daher verwendet, werden um bei einem solchen Ansprechen seiner Sensoren ein Diebstahlwarnsignal auszugeben.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden unter Bezugnahme auf die beigefügten Zeichnungen anhand von Ausführungsbeispielen näher erläutert und beschrieben.
- **Fig. 1**: ist eine schematisierte Draufsicht auf eine Photovoltaikanlage mit vier Solarmodulen und einem zentralen Einstrahlungssensor.
- **Fig. 2**: zeigt ist eine Seitenansicht der Photovoltaikanlage gemäß Fig. 1.
- **Fig. 3**: ist ein Blick auf das Lichteintrittfenster des Einstrahlungssensors gemäß den Fig. 1 und 2.
- **Fig. 4**: ist ein Blick auf das Lichteintrittsfenster eines anderen Einstrahlungssensors.
- **Fig. 5**: ist ein Blick auf das Lichteintrittsfenster und eine danebenliegende Vergleichsoberfläche eines anderen Einstrahlungssensors.
- **Fig. 6**: ist eine Seitenansicht der Anordnung gemäß Fig. 5.
- **Fig. 7**: ist eine Seitenansicht einer zu Fig. 5 und 6 alternativen Ausführungsform des Einstrahlungssensors.
- **Fig. 8**: ist eine Seitenansicht noch einer Alternative zu dem Einstrahlungssensor gemäß den Fig. 5 und 6; und
- **Fig. 9**: skizziert einen Einstrahlungssensor mit zugehöriger Lagerung, in die eine Lastzelle integriert ist.

### FIGURENBESCHREIBUNG

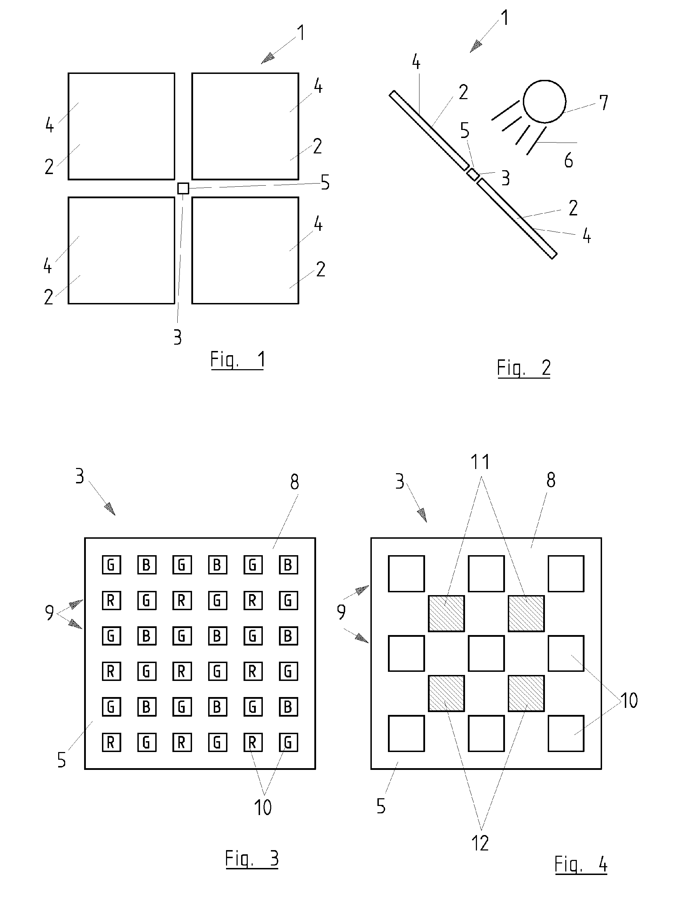

Die in den Fig. 1 und 2 skizzierte Solaranlage 1 weist vier Solarmodule 2 und einen zentral zwischen den Solarmodulen 2 angeordneten Einstrahlungssensor 3 auf. Die Oberflächen 4 der Solarmodule 2 und die Oberfläche 5 eines Lichteintrittsfensters des Einstrahlungssensors 3 sind dabei parallel zueinander angeordnet, so dass der Einfallwinkel des Lichts 6 von der Sonne 7 überall derselbe ist. Der Einstrahlungssensor 3 dient zur Erfassung der solaren Lichtintensität des Lichts 6 von der Sonne 7. Mit Hilfe dieser Information werden die elektrischen Leistungen der Solarmodule 2 beurteilt. Diese Informationen können auch zur Festlegung der Betriebsbedingung der Solarmodule 2 verwendet werden oder zur Ermittlung, wieviel Leistung diese Solarmodule 2 unter optimalen Betriebsbedingungen liefern können/müssen. Etwaiger Niederschlag auf die Photovoltaikanlage 1 in Form von Staub, Regen, Schnee, auskondensierendem Nebel oder dgl. wirkt sich grundsätzlich gleichmäßig sowohl auf den Einstrahlungssensor 3 als auch die Solarmodule 2 aus, zumindest wenn diese grundsätzlich gleiche Eigenschaften aufweisen. Die vorliegende Erfindung befasst sich damit, derartigen Niederschlag oder eine hieraus resultierende Belegung der Oberfläche 5 dennoch zu erkennen und zu analysieren.

**Fig. 3** zeigt ein Lichteintrittsfenster 8 des Einstrahlungssensors 3, dessen Oberfläche 5 hier die gesamte aktive, d. h. zur Datengewinnung genutzte Oberfläche des Einstrahlungssensors 3 ausmacht. Hinter dem Lichteintrittsfenster 8 liegt ein Array 9 von Photosensoren 10. Die Gesamtheit der Photosensoren 10 dient dabei zur Erfassung der solaren Lichtintensität, die durch das Lichteintrittsfenster 8 einfällt. Gleichzeitig werden die Signale von den einzelnen Photosensoren 10 untereinander abgeglichen, um Variationen über der Oberfläche 5 zu erkennen, die einen Hinweis auf Niederschlag auf die Oberfläche 5 sind. Beispielsweise kann ein Regentropfen die von unter seinem Auftreffpunkt liegenden Photosensoren 10 gemessene Lichtintensität reduzieren, während er die von den benachbarten Photosensoren 10 gemessene Lichtintensität unbeeinflusst lässt. In einzelnen Bahnen ablaufendes Regenwasser führt ebenfalls zu einer markanten Variation der von den einzelnen Photosensoren 10 erfassten Lichtintensität.

Außerdem ist in **Fig. 3** durch Buchstaben R, G und B in den die Photosensoren 10 repräsentierenden Kästchen eine Bayer-Matrix von Photosensoren angedeutet, die durch Farbfilter speziell für rotes, grünes und blaues Licht empfindlich sind. Dieser Aufbau spricht demjenigen in einer RGB-Farbvideokamerachips. Hiermit ist es möglich, spektrale Informationen über das durch das Lichteintrittsfenster 8 einfallende Licht zu gewinnen. Auch diese enthalten Hinweise auf Niederschlag auf die Oberfläche 5 oder hieraus resultierender Belegung der Oberfläche 5, insbesondere wenn sie mit anderen Informationen, wie sie im Rahmen der vorliegenden Erfindung gewonnen werden, abgeglichen werden.

Bei dem Einstrahlungssensor 3 gemäß **Fig. 4** sind hinter dem Lichteintrittsfenster 8 neben den Photosensoren 10 auch kapazitive Sensoren 11 in einem Array 12 angeordnet. Die kapazitiven Sensoren 11 können allein oder zusätzlich zu den Photosensoren 10 verwendet werden, um Niederschlag auf die Oberfläche 5 oder hieraus resultierende Belegungen der Oberfläche 5 zu charakterisieren.

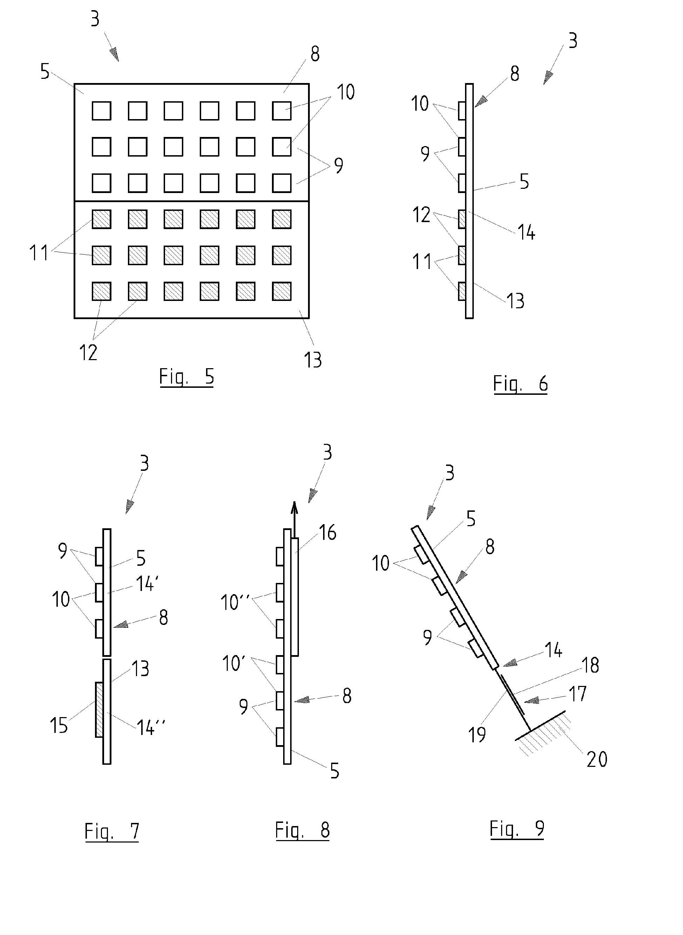

Bei dem Einstrahlungssensor 3 gemäß **Fig. 5** ist ebenfalls ein Array 9 aus Photosensoren 10 und ein Array 12 aus kapazitiven Sensoren 11 vorgesehen. Hier sind jedoch nur die Photosensoren 10 unterhalb des Lichteintrittsfensters 8 angeordnet, während die kapazitiven Sensoren 11 unter einer Vergleichsoberfläche 13 angeordnet sind, die parallel zu der und seitlich neben der Oberfläche 5 des Lichteintrittsfensters 8 angeordnet ist. Auch die Vergleichsoberfläche 13 zählt aber zur aktiven Oberfläche des Einstrahlungssensors 3. Die Seitenansicht gemäß Fig. 6 lässt erkennen, dass im vorliegenden Fall die gesamte aktive Oberfläche des Einstrahlungssensors 3, d. h. einschließlich der Vergleichsoberfläche 13 von einem einzigen Körper 14 ausgebildet wird, beispielsweise einer Glasscheibe.

Dies ist bei der in **Fig. 7** skizzierten Ausführungsform des Einstrahlungssensors 3 anders. Hier sind die Photosensoren 10 hinter einem Teilkörper 14' mit der Oberfläche 5 angeordnet, während die Vergleichsoberfläche 13 diejenige eines Teilkörpers 14" ist. An diesem Teilkörper 14" ist ein mechanisch-elektrischer Wandler 15 angeordnet, mit dem die Eigenfrequenz des Teilkörpers 14" abgefragt werden kann, die von der Belegung der Oberfläche 13 und der Bedämpfung des Teilkörpers 14" in Folge von Niederschlag abhängt. Alternativ kann der mechanisch-elektrische Wandler auch als Körperschallmikrofon zur Erfassung von Körperschallschwingungen des Teilkörpers 14" in Folge von Niederschlag ausgebildet sein.

**Fig. 8** skizziert eine Ausführungsform des Einstrahlungssensors 3, bei der eine Verunreinigungsschutzabdeckung 16 über einen Teil der Oberfläche 5 vorgesehen ist, hinter dem Photosensoren 10" liegen, während Photosensoren 10' hinter einem anderen Teil der Oberfläche 5 von der Verunreinigungsschutzabdeckung 16 nicht abgedeckt sind. Die Verunreinigungsschutzabdeckung 16 ist in Richtung eines Pfeils vorübergehend motorisch entfernbar, um mit den Photosensoren 10" einen durch Belegung der Oberfläche 5 unbeeinflussten Vergleichsmesswert zu erlangen, während der Messwert der Photosensoren 10' durch Niederschlag und in dessen Folge entstehende Bewegungen der Oberfläche 5 beeinflusst ist.

**Fig. 9** skizziert die Möglichkeit einer Erfassung einer Masseänderung des die Oberfläche 5 aufweisenden Körpers 14 über eine Lastzelle 17 hier in Form eines Dehnungsmessstreifens 18, der an einem Haltearm 19 vorgesehen ist, welcher den Einstrahlungssensor 3 gegenüber einer Basis 20 abstützt. Es versteht sich, dass die Lastzelle 17 dabei auch Windlasten und dergleichen auf den Einspannungssensor 3 erfasst.

### BEZUGSZEICHENLISTE

- 1: Solaranlage
- 2: Solarmodul
- 3: Einstrahlungssensor
- 4: Oberfläche
- 5: Oberfläche
- 6: Licht
- 7: Sonne
- 8: Lichteintrittsfenster
- 9: Array
- 10: Photosensor
- 11: kapazitiver Sensor
- 12: Array
- 13: Vergleichsoberfläche
- 14: Körper
- 15: mechanisch-elektrischer Wandler
- 16: Verunreinigungsschutzabdeckung
- 17: Lastzelle
- 18: Dehnungsmessstreifen
- 19: Haltearm
- 20: Basis

## Patentansprüche

1. Einstrahlungssensor (3) mit einem eine äußere Oberfläche (5) aufweisenden Lichteintrittsfenster (8) für die Erfassung einer solaren Lichtintensität zur Beurteilung der elektrischen Leistung von der solaren Lichtintensität ausgesetzten Solarmodulen (2), **dadurch gekennzeichnet, dass** eine Einrichtung zur Erfassung von Niederschlag auf die und/oder hieraus resultierender Belegung der Oberfläche (5) vorgesehen ist.

2. Einstrahlungssensor (3) nach Anspruch 1, **dadurch gekennzeichnet, dass** hinter der Oberfläche (5) und/oder einer parallel zu der und seitlich neben der Oberfläche (5) angeordneten Vergleichsoberfläche (13) des Einstrahlungssensors (3) ein Array (9, 12) von Sensoren (10, 11) angeordnet ist, deren Signale miteinander abgeglichen werden.

3. Einstrahlungssensor (3) nach Anspruch 2 oder 3, **dadurch gekennzeichnet, dass** die Sensoren (10, 11) über eine Fläche von 25 bis 250 cm² verteilt angeordnet sind und untereinander einen Abstand von bis zu 5 cm aufweisen.

4. Einstrahlungssensor (3) nach Anspruch 2 oder 3, **dadurch gekennzeichnet, dass** die Sensoren Photosensoren (10) sind, mit denen auch die solare Lichtintensität gemessen wird.

5. Einstrahlungssensor (3) nach einem der Ansprüche 1 bis 4, **dadurch gekennzeichnet, dass** die Einrichtung mindestens einen kapazitiven Sensor (11) aufweist.

6. Einstrahlungssensor (3) nach einem der Ansprüche 1 bis 5, **dadurch gekennzeichnet, dass** die Einrichtung die Masse eines die Oberfläche (5) und/oder eines eine parallel zu der und seitlich neben der Oberfläche (5) angeordnete Vergleichsoberfläche (13) aufweisenden Körpers (14) des Einstrahlungssensors (3) erfasst.

7. Einstrahlungssensor(3) nach Anspruch 6, **dadurch gekennzeichnet, dass** die Einrichtung eine den Körper (14) des Einstrahlungssensors (3) abstützende oder an einer Abstützung des Körpers (14) des Einstrahlungssensors (3) angeordnete Lastzelle (17) umfasst.

8. Einstrahlungssensor (3) nach Anspruch 6, **dadurch gekennzeichnet, dass** die Einrichtung eine Eigenfrequenz des Körpers (14) des Einstrahlungssensors (3) erfasst.

9. Einstrahlungssensor (3) nach einem der vorhergehenden Ansprüche, **dadurch gekennzeichnet, dass** die Einrichtung einen mechanisch-elektrischen Wandler (15) aufweist, der an einen die Oberfläche (5) und/oder einen eine parallel zu der und seitlich neben der Oberfläche (5) angeordnete Vergleichsoberfläche (13) aufweisenden Körper (14) des Einstrahlungssensors (3) gekoppelt ist.

10. Einstrahlungssensor (3) nach Anspruch 9, **dadurch gekennzeichnet, dass** der mechanisch-elektrische Wandler (15) Körperschall erfasst, zu dem der Körper (14) des Einstrahlungssensors (3) angeregt wird.

11. Einstrahlungssensor (3) nach einem der vorhergehenden Ansprüche, **dadurch gekennzeichnet, dass** eine Verunreinigungsschutzabdeckung (16) vorgesehen ist, die die Oberfläche (5) und/oder eine parallel zu der und seitlich neben der Oberfläche (5) angeordnete Vergleichsoberfläche (13) des Einstrahlungssensors (3) teilweise abdeckt.

12. Einstrahlungssensor (3) nach Anspruch 11, **dadurch gekennzeichnet, dass** die Verunreinigungsschutzabdeckung (16) motorisch entfernbar ist.

13. Einstrahlungssensor (3) nach einem der vorhergehenden Ansprüche, **dadurch gekennzeichnet, dass** die Einrichtung die spektrale Verteilung des durch die Oberfläche (5) und/oder eine parallel zu der und seitlich neben der Oberfläche (5) angeordnete Vergleichsoberfläche (13) des Einstrahlungssensors (3) fallenden Lichts (6) erfasst.

14. Einstrahlungssensor (3) nach einem der vorhergehenden Ansprüche, **dadurch gekennzeichnet, dass** die Einrichtung die Richtungsverteilung des durch die Oberfläche (5) und/oder eine parallel zu der und seitlich neben der Oberfläche (5) angeordnete Vergleichsoberfläche (13) des Einstrahlungssensors (3) fallenden Lichts (6) erfasst.

15. Einstrahlungssensor (3) nach einem der vorhergehenden Ansprüche, **dadurch gekennzeichnet, dass** die Einrichtung Temperatur- und/oder Luftfeuchtigkeits- und/oder Windgeschwindigkeits- und/oder Windrichtungssensoren und/oder Datum und/oder Uhrzeit und/oder Position und/oder Ausrichtung mitteilende Mittel aufweist.
